**Europäisches Patentamt**

**European Patent Office**

**Office européen des brevets**

(19)

(11) Publication number: **0 168 872**
**A1**

(12) **EUROPEAN PATENT APPLICATION**

(21) Application number: **85201016.4**

(22) Date of filing: **27.06.85**

(51) Int. Cl.⁴: **B 65 G 47/51, B 65 G 17/12**

(30) Priority: **19.07.84 NL 8402283**

(43) Date of publication of application: **22.01.86**
**Bulletin 86/4**

(84) Designated Contracting States: **AT BE CH DE FR GB IT LI LU NL SE**

(71) Applicant: **Rolco International B.V., Simon de Cockstraat 4 Postbus 5074, NL-5004 EB Tilburg (NL)**

(72) Inventor: **Boelen, Andrianus Johannes Maria, Ringbaan Oost 265, NL-5012 GE Tilburg (NL)**

(74) Representative: **Lips, Hendrik Jan George, Ir. et al, HAAGSCH OCTROOIBUREAU Breitnerlaan 146, NL-2596 HG Den Haag (NL)**

(54) **Conveyor device.**

(57) Conveyor device provided with article carriers (9) the ends of which are coupled with endless chains (1, 1′) guided around a number of sprockets (2, 2′; 3, 3′) which are rotatable around horizontal shafts and are positioned at different heights, so that the article carriers (9) during operation of the device are movable up- and downwards and/or to and fro by means of the chains (1, 1′), said chains (1, 1′) also being guided around sprockets (5, 5′; 6, 6′) supported by slides (4) all said sprockets (2, 3, 5, 6) guiding one chain (1) being staggered in respect of the sprockets (2′, 3′, 5′, 6′) of the other chain (1′) as seen in the direction of the rotation shafts of said sprockets.

Conveyor device.

The invention relates to a conveyor device provided with article carriers the ends of which are coupled with endless chains guided around a number of sprockets which are rotatable around horizontal shafts and are positioned at different heights so that the article carriers during the operation of the device are movable up- and downward and/or to and fro by means of the chains.

Such conveyor devices are e.g. used for conveying articles and accumulating these. In such devices both article carriers supporting chains and the sprockets guiding these chains are positioned such that as seen in the direction of the rotating shafts of the sprockets the chains are positioned right behind each other while the rotating shafts of sprockets positioned at the same height are in line with each other. The connection points of the article carriers and the chains are also in line with each other.

In case of such conveyor devices a problem is that, in particular when the velocity of the chains is increased and/or when the article carriers are running around the sprockets, the article carriers tend to start to swing. To prevent that the swinging article carriers, supported by different parts of the chains lying near each other, are coming into contact with each other it is usual to position the upward and downward  moving parts of the chains at a relatively great distance from each other because it is very complicated and expensive to provide guidings which can prevent the swinging of the article carriers.

The invention aims to obtain a conveyor device of the above mentioned kind in which the undesirable swinging of the article carriers is prevented in a simple and appropriate way.

According to the invention this is obtained because as seen in the direction of the rotation shafts of the sprockets, these sprockets, the chains and the connection points between the ends of the article carriers and the chains are staggered in respect of each other.

By applying the feature according to the invention a swinging of the article carriers is opposed so that the distance between the upward and downward moving chain parts and the article carriers connected to these parts can be kept smaller than in case of the customary devices. By this a considerable amount of space can be saved and higher velocities of the conveyor chains can be applied than in case of the customary devices.

The invention is further described by means of the drawing, in which:

Fig. 1 schematically shows a conveyor device, the various parts of which are shown in a first position;

Fig. 2 shows the conveyor device of Fig. 1 with various parts in an other position;

Fig. 3 schematically shows the positioning of the endless chains and sprockets; and

Fig. 4 schematically shows a perspective view of an article carrier.

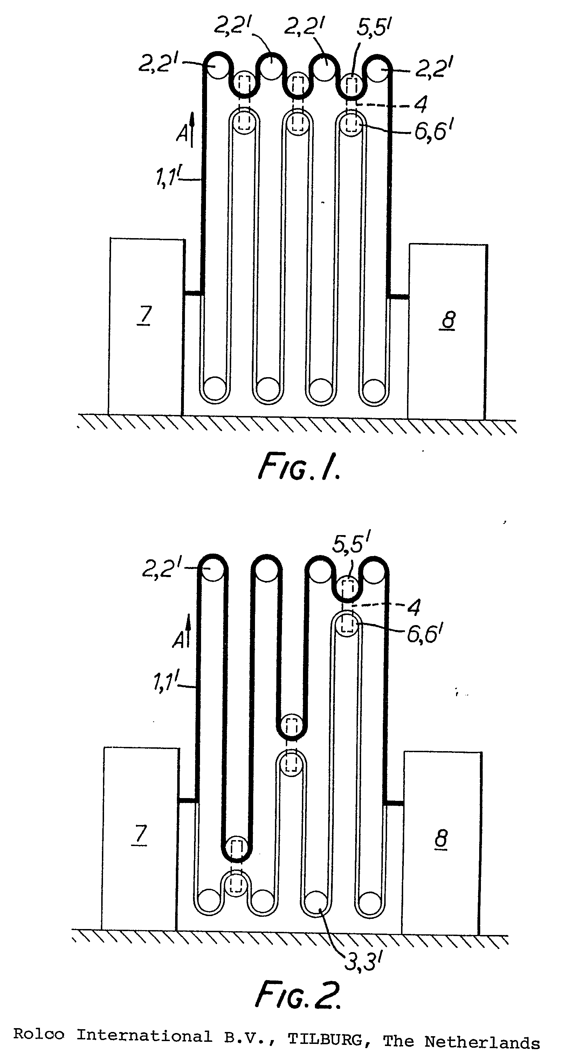

Fig. 1 and 2 schematically show a conveyor device which as well can be used as accumulator device.

As usual such a conveyor device comprises a pair of spaced endless conveyor chains 1 and 1', which near the upper side of the device are guided around a number of sprockets 2, 2' and near the lower side of the device around sprockets 3, 3', said sprockets 2, 2' en 3, 3' being rotatably supported by fixedly mounted horizontal shafts. Between each two sprockets 2, 2' a so-called slide 4 is provided supporting a pair of sprockets 5, 5' and 6, 6' being rotatably supported by horizontal shafts. With this a part of a chain 1, 1' positioned between two succeeding sprockets

2 and 2' respectively is guided below the upper sprocket 5, 5' of a slide positioned between these sprockets 2, 2', that part of the chain extending between the sprockets 3, 3' positioned near the lower side of the device and straight below the sprockets 2, 2' being guided around the lowest sprockets 6, 6' of the related slide 4.

Between both spaced conveyor chains 1, 1' article carriers 9 are provided which are moved in the direction according to arrow A by means of the chains.

The articles are fed to the article carriers in an infeed station 7 and are removed from the carriers in a discharge station 8. The loaded article carriers are supported by the part of the conveyor chains being indicated with thick lines, the empty article carriers being supported by the part of the conveyor chains being indicated by two spaced thin lines.

If the discharge of articles at the discharge station 8 has to be discontinued the conveyor chains are held there but the supply of products in infeed station 7 can be continued because in such a case the article receiving portion of the conveyor chains is elongated by moving downwards succeeding slides 4 which is attended with a shortening of the portions of the conveyor chains 1, 1' supporting the article carriers on which no articles are present which will be clear from Fig. 2.

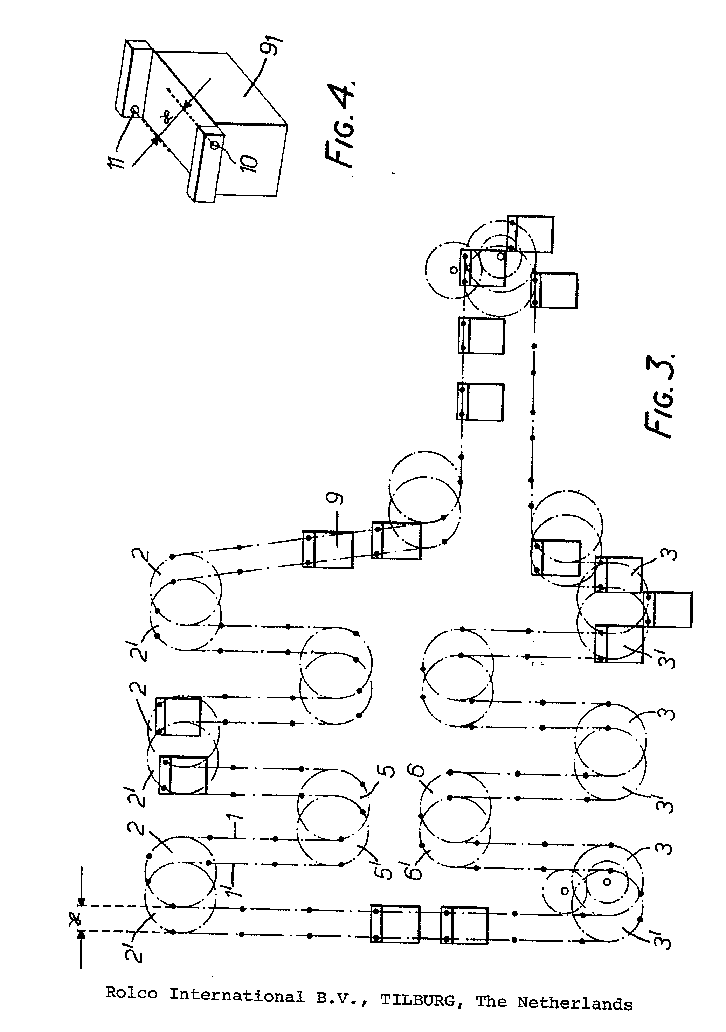

The positioning of the conveyor chains and the embodiment of the article carriers according to the invention is schematically shown in Fig. 3 and 4.

As appears from Fig. 3 the conveyor chain 1 together with the sprockets 2 and 3 guiding this chain is displaced over a distance x in horizontal direction in respect of the other endless chain 1' and the sprockets 2' and 3' guiding this chain.

In a corresponding way the sprockets 5, 5' and 6, 6' supported by the slide 4 and guiding the endless chains 1 and 1' respectively are displaced over the same distance x in horizontal direction.

Fig. 4 schematically shows an article carrier 9. As appears the connection points 10 and 11 for connecting the article carrier 9 to the chains 1 and 1' are displaced over a distance x in respect of each other.

As appears in particular from Fig. 3 when applying the construction according to the invention it is obtained that the connection points 10 and 11 in which an article carrier is connected to the endless conveyor chains 1 and 1' are not lying on a line perpendicular to the plane of a conveyor chain, the connection points nevertheless lying always in a horizontal plane so that the right position of the article carriers is always maintained during the movement of the article carrier through the device. A swinging of the article carrier is precluded except over a small distance caused by tolerances, if any, in the connection points 10 and 11.

- claims -

- C l a i m s -
----------------

1.    Conveyor device provided with article carriers (9), the ends of which are coupled with endless chains (1,1'.) guided around a number of sprockets (2,2'; 3,3') which are rotatable around horizontal shafts and are positioned at different heights, so that the article carriers (9) during operation of the device are movable up- and downwards and/or to and fro by means of the chains (1,1'), characterized in that as seen in the direction of the rotation shafts of the sprockets (2,2'; 3,3'), these sprockets, the chains (1,1') and the connection points between the ends of the article carriers (9) and the chains (1,1') are staggered in respect of each other.

2.    Conveyor device according to claim 1, characterized in that the chains (1,1') are guided around sprockets (5,5'; 6,6') supported by slides (4), the sprockets (5,5';6,6') in the slides (4) for the different chains (1,1') being staggered in respect of each other as seen in the direction of the rotation shafts of said sprockets (5,5'; 6,6').

----------

FIG. I.

FIG. 2.

Rolco International B.V., TILBURG, The Netherlands

FIG. 4.

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 142 626 (BRADLEY)<br>* Abstract; figure 1 *<br><br>--- | 1 | B 65 G 47/51<br>B 65 G 17/12 |
| Y | DE-A-2 242 474 (KURGANSKOE PROJEKTNO KONSTRUKTORSKOJE BJURO)<br>* Figures 1-3; page 2, lines 2-10 *<br><br>----- | 1 | |

|  |
|---|
| TECHNICAL FIELDS SEARCHED (Int. Cl.4) |
| B 65 G 47<br>B 65 G 17 |

| The present search report has been drawn up for all claims | | |
|---|---|---|
| Place of search<br>THE HAGUE | Date of completion of the search<br>02-08-1985 | Examiner<br>MORRIS A.A. |